# EUROPÄISCHE PATENTSCHRIFT

(11) **EP 1 015 647 B1**
(45) Veröffentlichungstag und Bekanntmachung des Hinweises auf die Patenterteilung: **02.05.2002**
(21) Anmeldenummer: 98946417.7
(22) Anmeldetag: 22.08.1998
(51) Int. Cl.: C21D 11/00, C21D 9/56, C21D 1/76

(54) **VERFAHREN ZUR WÄRMEBEHANDLUNG VON TEILEN**
METHOD FOR THERMAL TREATMENT OF PARTS
PROCEDE POUR LE TRAITEMENT THERMIQUE DE PIECES

(30) Priorität: 04.09.1997 DE 19738653
(43) Veröffentlichungstag der Anmeldung: 05.07.2000
(73) Patentinhaber: MESSER GRIESHEIM GMBH, 60270 Frankfurt (DE)
(72) Erfinder: SCHMIDT, Hans-Peter, D-40822 Mettmann (DE)
(86) Internationale Anmeldenummer: EP9805357
(87) Internationale Veröffentlichungsnummer: WO9911829

(56) Entgegenhaltungen:
- EP-A- 0 155 477
- EP-A- 0 522 444
- EP-A- 0 792 940
- GB-A- 1 577 179
- US-A- 4 975 047
- US-A- 5 261 976
- US-A- 5 385 337

## Beschreibung

Die Erfindung betrifft ein Verfahren zur Wärmebehandlung von Teilen nach dem Oberbegriff der Ansprüche 1 und 13.

Bei der Wärmebehandlung von Metallteilen, insbesondere beim Härten von Vergütungsstählen, ist eine Gasatmosphäre im Behandlungsraum des Ofens nötig, die die kohlenstoffhaltigen Metallteile während der Aufheiz- und Haltephase nicht auf- oder entkohlt. Eine solche kohlungsneutrale Gasatmosphäre wird durch Stickstoff und reaktive Komponenten eingestellt, die in dem Behandlungsraum des Ofens bei Temperaturen > 600°C eingedüst oder eingeleitet werden.

In einigen speziellen Fällen, die vom Ofentyp und -zustand abhängen, reicht es aus, Stickstoff und Kohlenwasserstoffe bis 1 Vol.% in den Behandlungsraum des Ofens einzudüsen oder einzuleiten, um entkohlungsfrei zu Härten. Die zudosierte Menge an Kohlenwasserstoffen hängt im wesentlichen vom Sauerstoffeintrag in den Behandlungsraum des Ofens ab. Da dieser Sauerstoffeintrag vom Ofentyp- und zustand abhängig ist, kann die in der Gasatmosphäre enthaltene Sauerstoffmenge nur empirisch ermittelt werden. Werden zu viele Kohlenwasserstoffe eingedüst beziehungsweise eingeleitet, scheidet sich Ruß auf der gesamten Ofenraumoberfläche ab, der von Zeit zu Zeit abgebrannt werden muß.

C₃H₈ = CH₄ + 2 C + 2 H₂ (Rußabscheidung)

Neben dem Sauerstoffeintrag in den Behandlungsraum eines Ofens durch Leckagen wird heute zunehmend nicht kryogen erzeugter Stickstoff zur Wärmebehandlung von Teilen in einer Gasatmosphäre eingesetzt, der bis zu 3 Vol.% Restsauerstoff enthält.

Je nach Restsauerstoffgehalt des nicht kryogen erzeugten Stickstoffes stellt sich nach der Umsetzung des Sauerstoffes mit Kohlenwasserstoffen eine Schutzgasatmosphäre ein, die aus Kohlenmonoxid, Wasserstoff und Stickstoff (geringe Mengen an Methan, Wasserdampf und Kohlendioxid) besteht.

Der über den Stickstoff eingetragene Sauerstoff wird über folgende Reaktion mit den Kohlenwasserstoffen abgebunden, bevor er mit dem Vergütungsstahl in Kontakt kommt.

1,5 O₂ + C₃H₈ = 3 CO + 4 H₂

Aus der EP 0 522 444 A2 ist es bekannt, nicht kryogen erzeugten Stickstoff bei der Wärmebehandlung von Teilen einzusetzen, und durch spezielle Vorrichtungen die Reaktion des Sauerstoffes mit den Kohlenwasserstoffen abzuschließen, bevor die Mischung in Kontakt mit den in dem Behandlungsraum erhitzten Teilen kommt.

Die Menge der eingedüsten oder eingeleiteten Kohlenwasserstoffe muß an den im Behandlungsraum des Ofens vorhandenen Sauerstoffgehalt angepaßt sein, um eine Rußabscheidung bei gleichzeitiger Aufkohlung der Teile zu verhindern. Bei zu geringen Mengen an Kohlenwasserstoffen ist mit einer Oxidation der Teile zu rechnen.

Es wäre daher eine Einrichtung wünschenswert, mittels der eine optimale Dosierung der Kohlenwasserstoffe in den Behandlungsraum des Ofens möglich ist.

Der Erfindung liegt die Aufgabe zugrunde, ein Verfahren zu schaffen, mit der die Menge an Kohlenwasserstoffen dem Sauerstoffgehalt der Gasatmosphäre im Behandlungsraum des Ofens angepaßt werden kann.

Diese Aufgabe wird erfindungsgemäß durch die Merkmale des Anspruchs 1 gelöst.

Vorteilhafte Weiterbildungen der Erfindung sind in den Unteransprüchen angegeben.

Erfindungsgemäß wird die Sauerstoffaktivität des in dem Behandlungsraum des Ofens entstehenden Schutzgases erfaßt und aus dem erfaßten Sauerstoffaktivitäts-Wert ein Ist-Signal erzeugt. Das Ist-Signal wird einer Regeleinheit zugeführt, in der ein Soll-Wert für die Sauerstoffaktivität abgelegt ist. Aus dem Soll-Wert wird ein Soll-Signal gebildet, das mit dem Ist-Signal verglichen wird. Die Regeleinheit verändert bei Abweichungen zwischen dem Ist- und Soll-Signal die Zufuhr des Reduktionsgases so lange, bis das Ist-Signal dem Soll-Signal entspricht

Durch die erfindungsgemäße Regelung der Kohlenwasserstoffmengen in Abhängigkeit von dem tatsächlich im Behandlungsraum sich einstellenden Sauerstoffgehalt über die Sauerstoffaktivitäts-Messung, werden Kohlenwasserstoffe in den Behandlungsraum des Ofens eingedüst oder eingeleitet, mittels denen der Sauerstoff sicher über die Reaktion

1 C₃H₈ + (1 O₂ + 99 N₂) = 2 CO + 2 H₂ + 1 CH₄ + 99 N₂

abgebunden wird, ohne daß eine Menge an Restkohlenwasserstoffen im Behandlungsraum des Ofens verbleibt, die unerwünschte Reaktionen mit den Teilen auslöst.

Durch die Messung der Sauerstoffaktivität der Gasatmosphäre im Behandlungsraum des Ofens werden die durch Leckagen in den Behandlungsraum des Ofens gelangenden Sauerstoffmengen und die im nicht kryogen erzeugten Stickstoff vorhandenen Sauerstoffmengen sowie deren über die Wärmebehandlungszeit der Teile auftretenden Veränderungen erfaßt und nachgeregelt. Damit werden die von der Auslastung der Druckwechseladsorptions- oder Membran-Stickstofferzeugungsanlage abhängigen Sauerstoffmengen in dem nicht kryogen erzeugten Stickstoff, die weiterhin von der eingesetzten Luft und deren Temperatur abhängig sind, bei der Wärmebehandlung von Teilen berücksichtigt.

Dabei ergibt 1 Vol.% Restsauerstoff im Stickstoff:
1,9% CO
1,9% H₂
0,95% CH₄
95,25% N₂
im ausreagierten Schutzgasgemisch.

Ein solches verdünntes Endogas besitzt die Fähigkeit, den in den Behandlungsraum des Ofens eingetragenen, gebundenen und freien Luftsauerstoff schnell abzubinden und ihn somit für den Wärmebehandlungsprozeß unschädlich zu machen. Das CO/H₂-Verhältnis beträgt bei optimaler Reaktion und Mischung ungefähr 2:3.

### Lufteintrag:

a)

   O₂ + 2 CO = 2 CO₂
b)

   O₂ + 2 H₂ = 2 H₂O

### Oxideintrag:

a)

   MeO + H₂ = Me + H₂O
b)

   MeO + CO = Me + CO₂

Das durch die sauerstoffabbindenden Komponenten entstehende Wasser und Kohlendioxid muß durch die im Behandlungsraum eingeleiteten Kohlenwasserstoffe umgesetzt werden, da die beiden Komponenten entkohlend auf den in dem Metall gelösten Kohlenstoff wirken.

### Abbinden von CO₂ und H₂O:

a)

   CO₂ + CH₄ = 2 CO + 2 H₂
b)

   H₂O + CH₄ = CO + 3 H₂

### Entkohlung:

a)

   C_{gelöst} + H₂O = CO + H₂
b)

   C_{gelöst} + CO₂ = 2 CO

Der Gehalt an reaktiven Komponenten (CO, H₂ und CH₄) ist somit abhängig von der Menge an eingetragenem un- bzw. gebundenen Sauerstoff und bestimmt den Erfolg der Wärmebehandlung. Es wird deshalb ein konstanter Sauerstoffgehalt im Stickstoff angestrebt, um einen ausreichend hohen CO- und H₂-Gehalt zu haben.

Sinkt der Sauerstoffgehalt im einzudüsenden oder einzuleitenden Stickstoff gegen Null ab und erfolgt durch die Leckagen nahezu kein Sauerstoffeintrag in den Behandlungsraum des Ofens, so wird die Kohlenwasserstoffrnenge gegen Null gehend reduziert und ausschließlich Stickstoff in den Behandlungsraum eingedüst oder eingeleitet.

Der in den Behandlungsraum des Ofens einzudüsende oder einzuleitende Stickstoff mit bis zu 3 Vol.% Sauerstoff und die Kohlenwasserstoffe werden außerhalb des Behandlungsraumes innig gemischt und direkt in die heißeste Stelle des Behandlungsraumes injiziert, so daß der Sauerstoff und die Kohlenwasserstoffe reagieren und sich ein kohlungsneutrales Reaktionsgas einstellt. Der Wasserdampfund der Kohlendioxidgehalt liegt in der Regel unterhalb von 0,10 Vol.%. Der Umsetzungsgrad wird mit Hilfe einer O₂- oder Lambda-Sonde kontinuierlich gemessen und die Kohlenwasserstoffzufuhr darüber geregelt. Bei der Messung mit einer Lambda-Sonde wird ein kleiner Meßgasstrom aus dem Behandlungsraum des Ofens abgesaugt, rapide abgekühlt und der Lambda-Sonde zugeführt. Das Meßsignal wird einer Regeleinheit, die einen Rechner enthält, übermittelt und die Sauerstoffaktivität berechnet.

Basierend auf diesen Werten wird die Kohlenwasserstoffmenge geregelt. Die Regelung der Kohlenwasserstoffzufuhr ist aufgrund der Meßanordnung unabhängig von der Sauerstoff- und somit auch von der Stickstoffmenge, da die Regelgröße die Sauerstoffaktivität des "fertigen Schutzgases" ist. Durch diese Verfahrensweise ist die Bildung von störendem Ruß auf ein Minimum gesenkt, da immer nur so viel Kohlenwasserstoff eingespeist wird, wie benötigt wird.

Gemäß einer vorteilhaften Ausbildung nach der Erfindung wird die Sauerstoffaktivität mit einer O₂-Sonde oder Lambda-Sonde erfaßt. Hierdurch wird eine besonders kostengünstige Regelung möglich, die einfach bei bestehenden Ofenanlagen eingebaut werden kann. Bei dem Anwender sind keine aufwendigen Umbauten der Ofenanlagen erforderlich. Die Wartung kann vom Anwender in einfacher Weise vorgenommen werden.

Nach einer weiteren erfindungsgemäßen Ausbildung wird die Sauerstoffaktivität an der im wesentlichen heißesten Stelle des Behandlungsraumes erfaßt, wo die Wärmebehandlung der Teile erfolgt. Durch die Messung der Sauerstoffaktivität an der im wesentlichen heißesten Stelle wird die am weitestgehend ausreagierte Schutzgaszusammensetzung im Behandlungsraum des Ofens gemessen. Da sich in einem solchen ausreagierten Schutzgasgemisch die geringslen Restkohlenwasserstoffe, Wasser- und Kohlendioxidkonzentrationen an dieser Stelle einstellen, werden auch nur die geringsten Kohlenwasserstoffmengen zudosiert, wodurch die Rußgefahr reduziert ist.

Gemäß einer weiteren erfindungsgemäßen Ausbildung wird dem Stickstoff mit bis zu 3 Vol.% Sauerstoff eine den O₂ Vol.% - Anteilen angepaßte Grundmenge des Reduktionsgases vor dem Einspritzen in den Behandlungsraum des Ofens zugeführt wird.

Dadurch, daß dem Stickstoff mit bis zu 3 Vol.% Sauerstoff eine dem Sauerstoffgehalt angepaßte Grundmenge des Reduktionsgases außerhalb des Behandlungsraumes zugeführt wird, erfolgt eine innige Mischung der beiden Gase vor der Eindüsung oder Einleitung in den Behandlungsraum. Es bildet sich ein homogenes Gasgemisch aus Stickstoff mit bis zu 3 Vol.% - Sauerstoff und der Grundmenge des Reduktionsgases, welches zu einer "schlagartigen" Umsetzung des Sauerstoffs in die Komponenten Kohlenmonoxid, Wasserstoff und Restmethan sowie Spuren an Wasser und CO₂ unmittelbar nach dem Eindüsen oder Einleiten in den Behandlungsraum führt Diese Grundmenge des Reduktionsgases kann automatisch an der Regeleinheit oder einer separaten Steuereinheit vorgegeben werden. Nach einer weiteren Ausbildungsvariante kann die Grundmenge des Reduktionsgases auch manuell vorgegeben werden, indem Stellelemente manuell eingestellt oder Blenden in den Zuführleitungen angeordnet werden. Durch die dem Stickstoff mit bis zu 3 Vol.% - Sauerstoff zugeführte Grundmenge des Reduktionsgases wird die über die Sauerstoffaktivität zu regelnde Menge des Reduktionsgases verringert und damit die Regelgeschwindigkeit erhöht.

Die Grundmenge des Reduktionsgases ist immer so bemessen, daß die daraus resultierende Sauerstoffaktivität immer höher ist, als die zu regelnde.

Betriebsversuche haben gezeigt, daß die Grundmenge des Reduktionsgases, dem Teilvolumentrom an Sauerstoff im Stickstoff entspricht und demzufolge eine gleichmäßige schwingungsarme Regelung der Sauerstoffaktivität erfolgt. D.h., wenn in 10 m³ (N₂, O₂)/h 1 Vol.% Sauerstoff vorhanden ist, müssen 100 I Propan/h dem onsite-Stickstoff zugemischt werden.

Gemäß einer weiteren erfindungsgemäßen Ausbildung wird dem Stickstoff mit bis zu 3 Vol.% Sauerstoff eine von der Regeleinheit ermittelte Regelmenge des Reduktionsgases zugeführt.

Die über die Sauerstoffaktivität der Gasatmosphäre im Behandlungsraum des Ofens gemessene Sauerstoffaktivität muß weiter gesenkt werden, um in die für die Wärmebehandlung günstigen Bereiche zu kommen.

Die dabei in der Regeleinheit ermittelte Regelmenge wird dem Stickstoff mit bis zu 3 Vol.% Sauerstoff zugeführt, was eine Mischung der Gase bewirkt, so daß ein homogenes Gasgemisch entsteht, das nach Eindüsung oder Einleitung in den Behandlungsraum unmittelbar den Rest-Sauerstoff umwandelt.

Gemäß einer weiteren erfindungsgemäßen Ausbildung wird dem Behandlungsraum des Ofens eine von der Regeleinheit ermittelte Regelmenge des Reduktionsgases separat zugeführt.

Bei Umrüstung vorhandener Ofenanlagen auf das erfindungsgemäße Verfahren können überraschender Weise die vorhandenen Gaszuführungen genutzt werden und die Regelmenge des Reduktionsgases direkt dem Behandlungsraum zugeführt werden. Die Umsetzung des Sauerstoffs wird hierbei vorteilhaft von in dem Behandlungsraum installierten Ventilatoren udgl. unterstützt, die eine Umwälzung der Gasatmosphäre im Behandlungsraum des Ofens gewährleisten.

Gemäß einer weiteren erfindungsgemäßen Ausbildung wird in den Behandlungsraum des Ofens als Reduktionsgas Propan eingedüst oder eingeleitet.

Beim Einsatz von Propan fällt der CO₂- und H₂O-Gehalt der Gasatmosphäre im Behandlungsraum des Ofens rasant auf geringe Gehalte von kleiner 0,01 Vol.% CO₂ und kleiner 0,03 Vol.% H₂O. Da lediglich Wasser und Kohlendioxid entkohlend wirken, sind aufgrund der äußerst geringen Konzentration auch die metallografischen Ergebnisse einwandfrei. Es traten keinerlei Unterschiede zu Teilen auf, die unter kryogenem Stickstoff wärmebehandelt wurden.

Gemäß einer weiteren erfindungsgemäßen Ausbildung wird der gasförmige Stickstoff mit bis zu 3 Vol.% Sauerstoff und das Reduktionsgas im Gegenstrom zu der Transportrichtung der Teile in den Behandlungsraum des Ofens eingedüst oder eingeleitet. Hierdurch werden besonders günstige Eigenschaften der Gasphase genutzt, da ein solches Schutzgasgemisch, welches bei höheren Temperaturen hergestellt wurde, während seiner zwangsläufigen Abkühlung eine höhere Kohlenstoffaktivitäten aufweist. Bei einer solchen Fahrweise tritt eine Entkohlung der Teile während ihrer Aufheizphase nicht auf.

Das erfindungsgemäße Verfahren wird bevorzugt beim Glühen, Vergüten, Sintern und Löten von Teilen eingesetzt.

Das Verfahren wird vorteilhaft mit einer Vorrichtung durchgeführt, bei der in dem Behandlungsraum eine O₂-Sonde angeordnet ist, die über eine Leitung mit einer Regeleinheit verbunden ist Dabei ist die Regeleinheit mit einer Einrichtung zur Soll-Werteingabe verbunden, mittels der ein Soll-Wert vorgebbar ist. Die Regeleinheit ist über eine Steuerleitung mit einem Stellelement verbunden, das in einer Zuführleitung angeordnet ist, die mit der Gasversorgung für das Reduktionsgas und mit dem Behandlungsraum des Ofens verbunden ist.

Nach einem erfindungsgemäßen Ausführungsbeispiel ist die Zuführleitung für das Reduktionsgas mit einer Zuführleitung verbunden, die mit der Gasversorgung für den Stickstoff mit bis zu 3 Vol.% Sauerstoff und dem Behandlungsraum des Ofens verbunden ist.

Nach einem weiteren erfindungsgemäßen Ausführungsbeispiel ist eine Zuführleitung mit der Gasversorgung für das Reduktionsgas und der Leitung für den Stickstoff mit bis zu 3 Vol.% Sauerstoff verbunden, wobei in der Zuführleitung für das Reduktionsgas ein Stellelement angeordnet ist.

Nach einem weiteren erfindungsgemäßen Ausführungsbeispiel ist die Gasversorgung eine Druckwechseladsorptions- oder Membran-Stickstofferzeugungsanlage.

Nach einem weiteren erfindungsemäßen Ausführungsbeispiel mündet die Zuführleitung für den Stickstoff mit bis zu 3 Vol.% Sauerstoff an der zu der Transportrichtung der Teile entgegengesetzten Seite in den Behandlungsraum.

Die Einspeisung des vorgemischten Gasgemisches kann dabei seitlich, beziehungsweise durch die Ofendecke erfolgen, und die Gasgeschwindigkeit muß der Reaktionsgeschwindigkeit so angepaßt sind, daß keine Abkühlung der wärmebehandelnden Teile erfolgt.

Ein Ausführungsbeispiel der Erfindung ist in der Zeichnung dargestellt und wird im folgenden näher beschrieben.

Es zeigen:

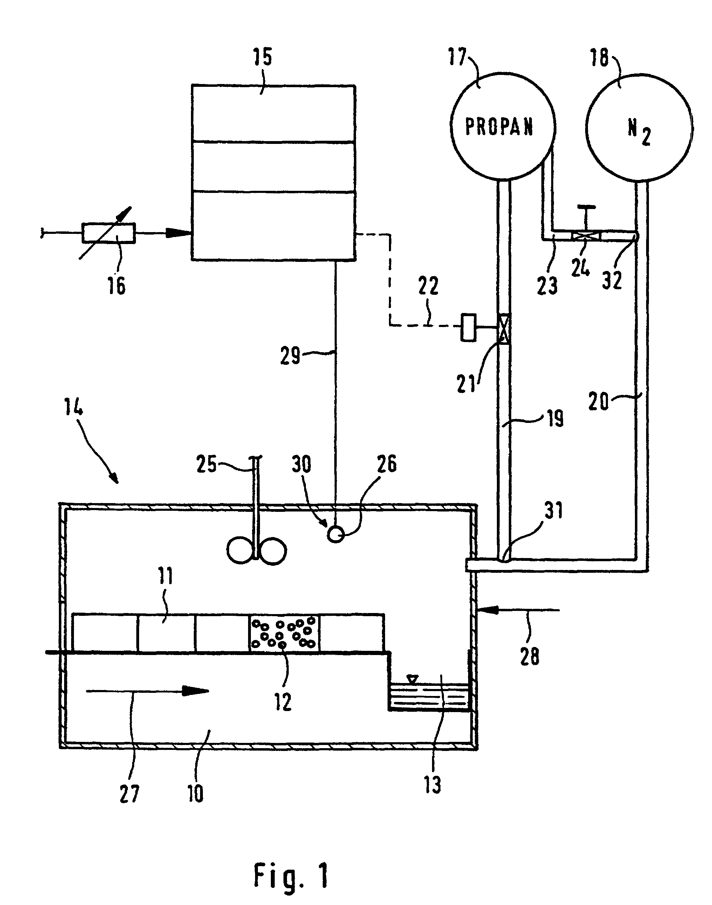

- Figur 1: eine schematische Darstellung der erfindungsgemäßen Vorrichtung
- Figur 2: ein Meßprotokoll der Sauerstoffsondenspannung in % C in Abhängigkeit von der Zeit
- Figur 3: Fotos von Gefügepräparationen der gehärteten Schrauben
- Figur 4: eine Sauerstoffsondenspannung in Abhängigkeit von der Behandlungstemperatur und Darstellung des Regelungsbereiches
- Figur 5: eine Lambda-Sondenspannung in Abhängigkeit von der Behandlungstemperatur und Darstellung des Regelungsbereiches

### Ausführungsbeispiel 1:

An dem Banddurchlaufofen 14 wurden Versuche zum Einsatz von nicht kryogen hergestelltem Stickstoff durchgeführt. Dazu wurden in den Stickstoffvolumenstrom mit bis zu 3 Vol.% Sauerstoff Propan zudosiert. Die Einspeisstelle 31, 32 wurde so gewählt, daß sich die einzelnen Gaskomponenten außerhalb des Behandlungsraumes 10 des Ofens 14 intensiv mischten.

Die Einspeisung des homogenen Gasgemisches erfolgte über eine als Lanze ausgebildete Zuführleitung 20 die über dem Fallschacht 13 installiert ist. An der Zuführleitung 20 wurde ein Meßgas entnommen und der Gehalt an Sauerstoff im Stickstoff bestimmt. Der eingestellte Sauerstoffgehalt im Stickstoff lag zwischen 0,5 und 1,0 Vol.% O₂. Die Grundmenge an Propan wurde über die Einstellung des Stellelements 24 der Sauerstoffkonzentration angepaßt und über Zuführleitung 23 der Zuführleitung 20 zugeführt.

Parallel zu der Messung der Sauerstoffaktivität über die O₂-Sonde 26 an der heißesten Stelle 30 im Behandlungsraum 10 wurde Meßgas für die Analyse der sich einstellenden Ofengaskomponenten über eine Rohrlanze (nicht dargestellt) abgepumpt, die ca. ein Meter vom Fallschacht 13 entfernt war. Es wurden die Gaskomponenten H₂, CO, CO₂, CH₄, H₂O, O₂ gemessen und registriert.

Das für die Gasanalyse abgepumpte Meßgas wurde nicht vollständig für die Gasanalyse verwendet, sondern im Teilstrom parallel über eine Lambda-Sonden-Meßeinheit geleitet und die Spannung in Millivolt gemessen. Basierend auf den Meßwerten der 3 verschiedenen Meßeinheiten können Aussagen über die Richtigkeit und Zuverlässigkeit der Meßsysteme erfolgen.

Die Rohrlanze für das Meßgas wurde durch eine vorhandene Probeneinführung gesteckt, die sich in der direkten Nähe der Sauerstoffsonde 26 (PE-Sonde) befindet. Die Berechnungen, die mit den Meßwerten der Gasanalyse und Lambda-Sonde gemacht wurden, wurden mit den Ergebnissen der in der Regeleinheit 15 durchgeführten Berechnungen verglichen.

Die Sauerstoffaktivität der Ofenatmosphäre wurde über die Sauerstoffsonde 26 und die Regeleinheit 15 geregelt und taktweise
300 Liter Propan pro Stunde zudosiert.

Die Ofentemperatur betrug bei allen Versuchen 900°C. Die Schrauben waren hauptsächlich aus 19 MnB4 und 35 B2. Das Abschreckmedium war Öl. Während der Versuche wurden in zeitlichen Abständen Schrauben entnommen und metallographisch untersucht.

In dem Banddurchlaufofen 14 wurden die Chargen 11 der Schrauben 12 unter einem Schutzgas gehärtet. Hierzu wurden die Chargen 11 durch den Ofen 14 transportiert (Transportrichtung 27), auf 900 °C erwärmt und am Ende des Banddurchlaufofens 14 in dem Ölbad im Fallschacht 13 abgeschreckt. In dem Behandlungsraum 10 des Ofens 14 wurde von einer On-Site Membran-Stickstofferzeugungsanlage 18 Stickstoff mit 0,60 Vol.% Sauerstoff über Leitung 20 im Gegenstrom 28 zu der Transportrichtung 27 der Schrauben 12 in den Behandlungsraum 10 eingedüst. Der Sauerstoffgehalt im Stickstoff wurde über Entnahme einer geringen Meßgasmenge (20 l/h) mit Hilfe eines Sauerstoffanalysegeräts ermittelt und kontrolliert. Abhängig von diesem Sauerstoffgehalt im Stickstoff wurde das Stellelernent 24, das in der Zuleitung 23 angeordnet ist, so eingestellt, daß eine den Sauerstoffanteilen angepaßte Grundmenge von 300 l/h Propan von der Propangasversorgung 17 in die Zuführleitung 20 für den Stickstoff mit 0,60 Vol.% Sauerstoff strömt. Das Stellelement 24 ist als Dosierventil ausgebildet und kann manuell oder über die Regeleinheit 15 eingestellt werden. Über die Sauerstoffsonde 26, die an der heißesten Stelle 30 im Behandlungsraum angeordnet ist, wird die Sauerstoffaktivität von
log PO₂ = - 18,60 (bar) des in dem Behandlungsraum 10 entstehenden Schutzgases erfaßt.

Aus dem erfaßten Sauerstoffaktivitäts-Wert von log PO₂ = -18,60 wird von der Sauerstoffsonde 26 ein ist-Signal von - 1045 mV erzeugt und der einen Rechner aufweisenden Regeleinheit 15 zugeführt. In der Regeleinheit 15 ist über Soll-Wert-Eingabeelement 16 ein Soll-Wert von - 18,60 für die Sauerstoffaktivität abgelegt, aus dem ein Soll-Signal von -1045 mV gebildet wird, das mit dem Ist-Signal verglichen wird. Bei Abweichunge zwischen dem Ist- und Soll-Signal wird von der Regeleinheit 15 das Stellelement 21 angesteuert, welches in der Zuführleitung 19 angeordnet ist, die mit der Propangasquelle 17 und mit der Zuführleitung 20 verbunden ist. Es strömt über Zuführleitung 19 eine von der Regeleinheit 15 ermittelte Regelmenge von 300 l/h des Propans in die Zuführleitung 20 für den Stickstoff mit 0,60 Vol.% Sauerstoff, bildet hier ein homogenes Gasgemisch und strömt in den Behandlungsraum des Ofens. Aus dem Gasgemisch bildet sich schlagartig ein Schutzgas mit folgender Zusammensetzung aus:
4% CO; 4% H₂; 1% CH₄; 0,4% CO₂; 0,35% H₂O.

Der sich eingestellte CO-Gehalt von 4 Vol.% CO liegt deutlich höher als der aus 0,60 Vol.% O₂ entstehende. Der CO-Gehalt müßte nur 1,20 Vol.% CO betragen, was auf einem Sauerstoffeintrag von 1,40 Vol.% O₂ schließen läßt, der ebenfalls von der Regeleinrichtung ausgeglichen wird.

Der Kohlenstoffpegel der Schutzgasatmosphäre im Behandlungsraum 10 wurde über den in Regeleinheit 15 vorhandenen PE-Rechner bestimmt.

Der Kohlenstoffspegel der Gasphase ist ein Maß für die auf- bzw. entkohlende Wirkung einer Gasphase in Bezug auf den Kohlenstoffgehalt, der im Metall gelöst ist. Fällt der herrschende Kohlenpegel der Gasphase unterhalb des Ist-Kohlenstoffgehaltes im Werkstoff, so tritt eine Entkohlung auf und umgekehrt, kohlt der Werkstoff auf. Der Kohlenstoffpegel wird aus der gemessenen Millivoltspannung, die die Lambda- bzw. Sauerstoffsonde mißt, errechnet

Der C-Pegel betrugt an der Anzeige 0,25 %C, was einer Sondenspannung von -1045 mV (siehe 44) bei einem CO-Gehalt von
17 Vol.% entspricht. Der theoretische C-Pegel liegt aufgrund der geringeren Kohlenmonoxidkonzentration im ausreagiertem Schutzgas (4 %CO, 4 %H₂, 1,% %CH₄, 0,35 %H₂O) bei 0,05 %C (siehe 45), so daß mit Randentkohlung zu rechnen gewesen wäre.

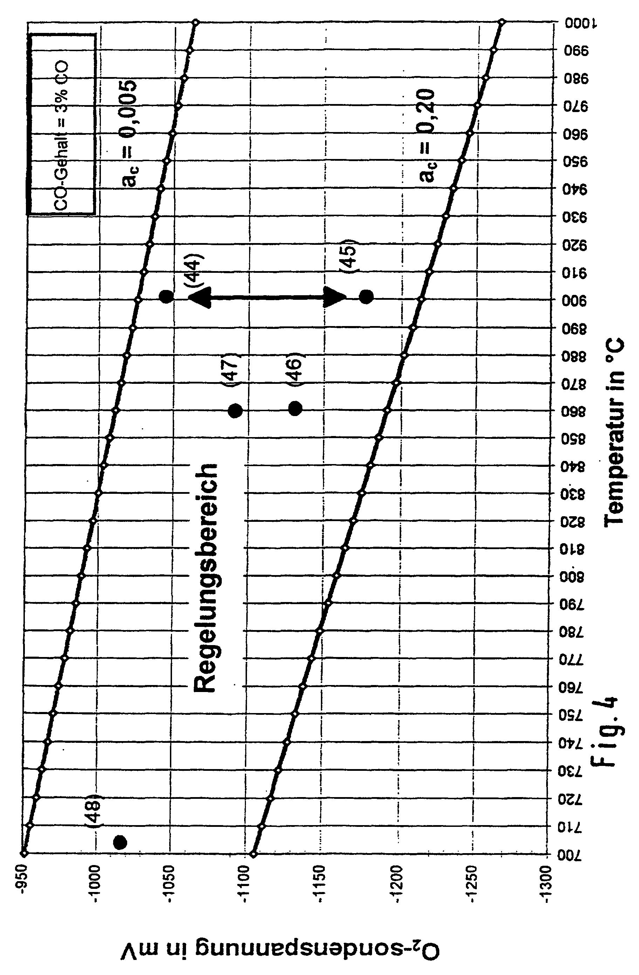

In Figur 4 sind die sich entstehenden Spannungen der Sauerstoffsonde in Abhängigkeit von der Ofentemperatur bzw. der Sondentemperatur dargestellt. Mit Hilfe der O₂-Sonde wird direkt die Sauerstoffaktivität der Gasphase im Ofenraum gemessen und demzufolge die direkte Wirksamkeit der Gasphase erfaßt. Die gemessene Spannung betrug -1045 mV (44), es hätte sich jedoch eine Sondenspannung von ca. -1200 mV einstellen müssen, um einen Kohlenstoffpegel von 0,19% C zu erhalten, damit keine Ent- oder Aufkohlung der Schrauben aus dem Werkstoff 19 MnB4 auftritt. Der eingetragene Arbeitsbereich in Figur 4 gibt an, welche Spannung als Sollwert geregelt werden muß, um eine Auf- bzw. Entkohlung zu vermeiden. Die Bezugsziffern 44 bis 48 geben die empirisch ermittelten Regelparameter in Abhängigkeit von der Temperatur wieder.

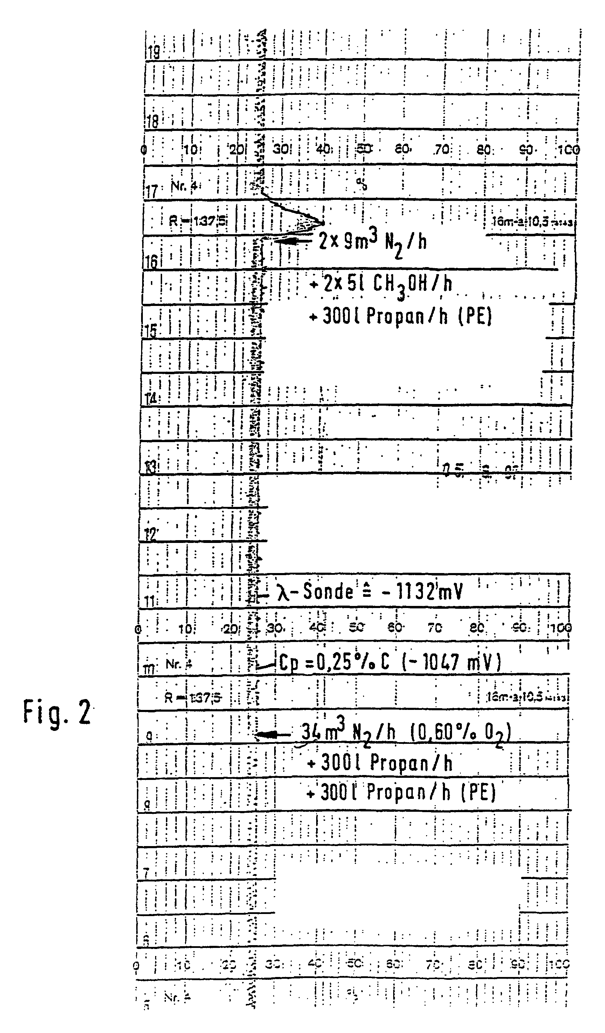

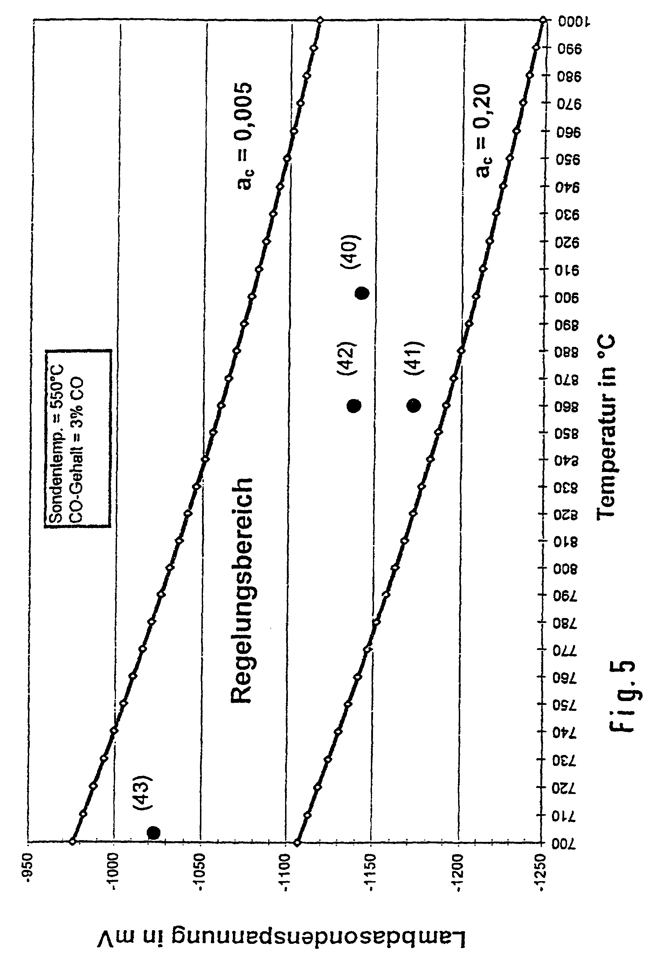

Als Grenzparameter wurden Kohlenstoffaktivitäten von 0,20 und 0,005 und eine Standardkohlenmonoxidkonzentration von 3 Vol.% CO ermittelt, aus denen die Grenzspannungen resultieren, in denen eine Gasphase eingestellt und geregelt werden muß, um bei den vorgegebenen Temperaturen chemische Veränderungen der Werkstoffe zu vermeiden. In Figur 5 sind Spannungen in mV für LambdaSonden, die bei 550°C gemessen wurden, dargestellt. Der eingetragene Arbeitsbereich gibt ebenfalls an, welche Spannungsintervalle zu regeln sind, um die vorgegebenen Ergebnisse der Wärmebehandlung zu erhalten. Die Bezugsziffern 40 bis 43 geben die empirisch ermittelten Regelparameter in Abhängigkeit von der Temperatur wieder. Die Bezugsziffer 40 gibt die Labda-Sonden-Spannung von - 1140 mV wieder, die parallel zu der geregelten Sauerstoffsondenspannung von - 1045 mV gemessen wurde. In Figur 2 sind die gemessenen Sauerstoffsondenspannungen dargestellt und die ermittelten Lambda-Sonden-Spannungen eingetragen.

Die Meßwerte der Sauerstoffsondenspannungen liegen auf einer gleichmäßigen Geraden, mit einer Schwankungsbreite von ± 0,01 % C, was einer Spannungsbreite von ± 2 mV entspricht. Die Meßpunkte zeigen deutlich, das Öffnen und Schließen des Propanmagnetventils 21, mit dem die eingestellte Propangasmenge von 300 l/h zudosiert wird, um den Sollwert von -1045 mV zu halten. Während der Versuchszeit gab es keine Regelstörungen und die gehärteten Schrauben wiesen keine Qualitätsmängel auf.

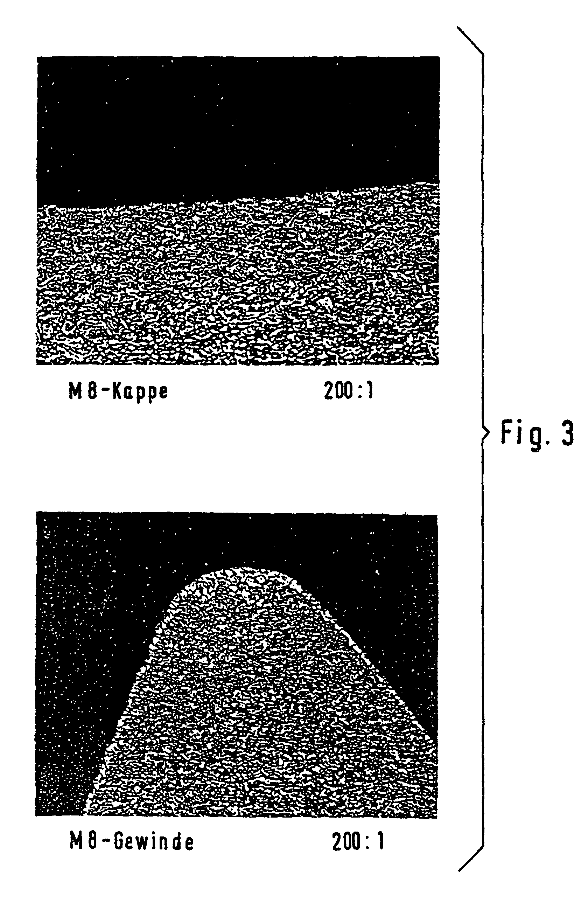

Metallographische Untersuchungen haben ergeben, daß keinerlei Randentkohlung aufgetreten ist und somit die Gasatmosphäre im Behandlungsraum einen neutalen C-Pegel besitzen muß. Das Gasgemisch an der Oberfläche der Teile steht somit nicht im chemischen Gleichgewicht, sondern stellt einen stationären Zustand dar, der sowohl keine Auf- bzw. Entkohlung erlaubt. Auf der Schraubenoberfläche herrscht eine neutrale Mikroatmosphäre. In Figur 3 sind zwei Fotos von Mikroschliffen einer Schraube aus 19 MnB4 dargestellt und an beiden präparierten Stellen der Schraube (Kappe und M8-Gewinde) ist keine Entkohlung, die auf die Wärmebehandlung des Härteprozesse zurückzuführen ist, zu erkennen. Der Deltaferritsaum im Randbereich des Gewindes ist auf die aufgebrachte Zinkphosphatschicht, die für den Umformprozeß bei der Drahtumformung benötigt wird, zurückzuführen und ist eine normale Erscheinung.

Sämtliche Schrauben, die unter Membran -Stickstoff (0,60 % O₂) und Propanzusatz im Durchlaufofen 14 aufgeheizt und in Öl abgeschreckt wurden, zeigten keinerlei Qualitätsunterschiede zu denen, die unter Membran -N₂ und Methanol vergütet wurden. Die geforderten Festigkeiten und Gefüge waren in Ordnung. Die Oberflächen der mit Membran-Stickstoff/Propan geglühten Schrauben waren etwas dunkler als die "konventionell" geglühten Schrauben. Oberflächenoxide wurden nicht festgestellt. An den zu vergütenden Schrauben haftende Oxide werden durch das eingesetzte Propan und das sich bildende reaktive Ofengas reduziert, so daß eine Entkohlung der Schrauben nicht eintreten kann.

3 FeO + C₃H₈ = 3 γ-Fe + 3 CO + 4 H₂

FeO + CO = γ - Fe + CO₂

FeO + H₂ = γ-Fe+H₂O

Die Substitution von Stickstoff/Methanol-Spaltgas (17% CO, 34% H₂, Rest N₂) durch On-Site-N₂ Propan (4% CO, 4% H₂, 1% CH₄, Rest N₂) ergab keinerlei Störungen bzw. Probleme. Die chargierten, gewaschenen Schrauben wurden mit einer Schütthöhe von ca. 5 cm durch das "magere" Schutzgas gut durchströmt, so daß die Schrauben im Einlaufbereich des Banddurchlaufofens 14 schnell getrocknet und der Luftsauerstoff innerhalb der Schraubenschüttung ausgetrieben wurde, bevor die Schrauben oxidierten. Die Oxidation der Schrauben durch eingebrachten Wasserdampf bzw. Luftsauerstoff hätte ein Anbacken bzw. Verschweißen der Schrauben untereinander bewirkt, so daß die Schrauben nicht einzeln in das Härteöl gefallen wären. Erstaunlicherweise reichten die 9 Vol.% an reaktiven Gaskomponenten aus, die Schrauben zu schützen und die CO₂-Emissionen um den Faktor 5 zu senken, ohne daß Qualitätsbeeinträchtigungen an den Schrauben auftraten.

Das "magere" Schutzgas brannte im Einlaufbereich des Ofens kontrolliert ab, so daß eine gefahrlose Abführung der Abgase erfolgte, ohne daß CO-haltige Restgase entstanden, welche giftig sind.

### Ausführungsbeispiel 2

Eine bei einem Trommelofen vorhandene Stickstoff/Methanol-Lanze wurde so umgebaut, daß das Propan in den strömenden Druckwechseladsorptions (PSA)-Stickstoff dosiert werden konnte und die beiden Komponenten gemischt wurden. Die Methanol-Leitung wurde stillgelegt.

Um das Propan problemlos in die Stickstoff-Leitung (3 bar ü) zu dosieren, wurde es einer 33 kg-Flüssigpropangasflasche entnommen. Mit Hilfe eines Druckminderers und mit einem Durchflußmengenmesser wurde die genaue Menge an Propan ermittelt.

Das Stickstoff/Sauerstoff/Propan-Gemisch wurde an der heißesten Stelle (Raum zwischen Trommel und Ofenheizung) eingespeist und dort der Sauerstoff in Kohlenmonoxid umgewandelt. Die eingesetzten Mengen an PSA-Stickstoff (0,53 % O₂) und Propan betragen
11 m³ PSA-N₂/h + 150 I Propan/h (Grundmenge: 60 I/h und Regelmenge: 90 l/h) und entsprechen dem gleichen Gesamt-Volumenstrom, der durch Stickstoff und Methanol erzeugt wird (5 m³ PSA-N₂/h + 4 I Methanol/h). Das im Zwischenraum gebildete kohlungsneutrale Schutzgas strömt über den Fallschacht durch die Trommel dem kalten Vergütungsmaterial entgegen und verläßt die Drehretorte über die pneumatisch angetriebene Schleuse. Das Abgas ist aufgrund der geringen Gehalte an brennbaren Bestandteilen (4 % H₂; 1,1 % CO; 0,4 % CH₄) nicht brennbar und muß somit über die vorhandene Abgasabsaugung sicher nach draußen abgeführt werden.

Sämtliche Werkstoffe(C55, 30 MnCr 5, C 20, C 29, 40 MnB4) die unter PSA-Stickstoff (0,50 - 0,60 % O₂) und Propanzusatz im Drehtrommelofen aufgeheizt und in Öl abgeschreckt wurden, zeigten keinerlei Qualitätsunterschiede zu denen, die unter PSA-N₂ und Methanol vergütet wurden. Die geforderten Härten und Randkohlenstoffgehalte waren in Ordnung. Die Oberflächen der. mit PSA-Stickstoff/Propan geglühten Kettenteile waren etwas dunkler als die konventionell geglühten Teile. Oberflächenoxide wurden nicht festgestellt, obwohl die Teile im weichen Zustand mit einer leichten Oxidhaut belegt sind. Die anhaftenden Oxide werden somit durch das eingesetzte Propan reduziert, so daß eine Entkohlung des Materials nicht eintreten kann.

3 FeO + C₃H₈ = 3 -γ Fe + 3 CO + 4 H₂

Im Drehtrommelofen hat sich während der gesamten Versuchszeit eine Gasatmosphäre eingestellt, die im Mittel folgende Gehalte aufwies:
3 % H₂; 1,2 % CO; 0,037 % H₂O (= Taupunkt von- 30 °C);
0,005 % CO₂; 0,40 % CH₄; Rest N₂

Die Begasungsrate betrug:
11 m³ PSA-N₂ (0,56 % O₂)/h + 150 I Propan/h
und die Ofentemperatur war 860 °C.

Die sich aus den einzelnen Gaskomponenten berechenbaren und gemessenen Sauerstoffaktivitäten bzw. Sondenspannungen sind in Figur 4 und 5 eingetragen. Die Bezugsziffem 41 und 46 geben den Regelbereich wieder, in dem die Ofenatmosphäre geregelt wurde. Die berechneten Kohlenstoffaktivitäten der Boudouard-Reaktion und dem Wassergasgleichgewicht sind zwar geringfügig unterhalb der Kohlenstoffaktivitäten der Werkstoffe, aber dennoch trat keine Randentkohlung auf. Dies hängt mit der hohen Kohlenstoffaktivität der Methanzerfallsreaktion zusammen, die auf der Werkstoffoberfläche einen günstigen stationären Zustand einstellt. Desweiteren sind die Gehalte an Wasser (0,037 Vol.%) und Kohlendioxid 0,005 Vol.% äußerst gering, denn nur diese Gaskomponenten können entkohlend wirken, so daß keine merkliche Randentkohlung der Werkstücke zu beobachten ist.

Der gemessene Gehalt an Kohlenmonoxid von 1,05 - 1,10 Vol.% ist bei allen Versuchen und über die Zeit konstant geblieben. Dieser CO-Gehalt entspricht exakt der Menge, die durch Umsetzung des Restsauerstoffs im hergestellten PSA-Stickstoff mit Propan entstehen kann.

3 O₂ + 2 C₃H₈ = 6 CO + 8 H₂

Der Restsauerstoffgehalt lag während der Versuche zwischen 0,52 bis 0,56 Vol.% O₂. Da aus einem Teil Sauerstoff 2 Teile CO entstehen, muß sich somit im Ofengas ein CO-Gehalt von 1,04 bis 1,12 Vol.% CO einstellen. Es kann somit über die Gehalte der einzelnen Gaskomponenten eine Aussage über die entkohlende Wirkung der Ofenatmosphäre gemacht werden.

Aufgrund der Übereinstimmung der Teilchenbilanz und der realen Messung ist festzustellen, daß es keine weiteren markanten Sauerstoffquellen gibt und somit das Ofensystem dicht ist (keine Leckagen). Weiterhin ist daraus zu ersehen, daß der Umsatz des Sauerstoffs vollständig ist, und der Lufteintrag über das Materialeinschleussystem (Takt: 30 Sekunden geschlossen, 10 Sekunden offen) äußerst gering ist. Dies wird auch dadurch bestätigt, daß durch einen Defekt an der Trockenschleuder nasse Teile chargiert wurden, ohne daß sich die Ofengasatmosphäre merklich änderte. Trotz Einsatz von nassem Material zeigten die angefertigten Schliffe keine Randentkohlung - die Teile waren ebenfalls in Ordnung.

## Patentansprüche

1. Verfahren zur Wärmebehandlung von Teilen, welche einer Schutzgasatmosphäre ausgesetzt sind, die an Ort und Stelle innerhalb eines Behandlungsraumes eines Ofens erzeugt wird, um die Oberflächeneigenschaften dieser Teile im wesentlichen zu erhalten, wobei das Verfahren folgende Schritte umfaßt:
Erhitzen des Ofens auf eine Temperatur über 600°C,
Eindüsen oder Einleiten gasförmigen Stickstoffs mit bis zu 3 Vol.% Sauerstoff und einem Reduktionsgas in den Behandlungsraum,
**dadurch gekennzeichnet,**
**daß** die Sauerstoffaktivität des in dem Behandlungsraum (10) des Ofens (14) entstehenden Schutzgases erfaßt und aus dem erfaßten Sauerstoffaktivitäts-Wert ein lst-Signal erzeugt wird, daß das Ist-Signal einer Regeleinheit (15) zugeführt wird, in der ein Soll-Wert für die Sauerstoffaktivität abgelegt ist,
**daß** aus dem Soll-Wert ein Soll-Signal gebildet wird, das mit dem Ist-Signal verglichen wird und
**daß** die Regeleinheit (15) bei Abweichungen zwischen dem Ist- und Soll-Signal die Zufuhr des Reduktionsgases so langes verändert, bis das Ist-Signal dem Soll-Signal entspricht,
wobei als Reduktionsgas ein Kohlenwasserstoffgas eingesetzt wird, und wobei ein kohlungsneutrales Gas erzeugt wird, indem der Soll-Wert für die Sauerstoffaktivität in einem Bereich gehalten wird, in welchem die Kohlenstoffaktivität a_{c} im Behandlungsraum zwischen 0,005 und 0,20 liegt.

2. Verfahren nach Anspruch 1,
daduch **gekennzeichnet**,
daß die Sauerstoffaktivität mit einer O₂-Sonde (26) oder Lambda-Sonde erfaßt wird.

3. Verfahren nach Anspruch 1 oder 2,
**dadurch gekennzeichnet,**
**daß** die Sauerstoffaktivität an der im wesentlichen heißesten Stelle (30) des Behandlungsraumes (10) erfaßt wird, wo die Wärmebehandlung der Teile erfolgt.

4. Verfahren nach einem der Ansprüche 1 bis 3,
**dadurch gekennzeichnet,**
**daß** dem Stickstoff mit bis zu 3 Vol.% Sauerstoff eine den O₂ Vol.% - Anteilen angepaßte Grundmenge des Reduktionsgases vor dem Einspritzen in den Behandlungsraum (10) des Ofens (14) zugeführt wird.

5. Verfahren nach einem der Ansprüche 1 bis 4,
**dadurch gekennzeichnet,**
**daß** dem Stickstoff mit bis zu 3 Vol.% Sauerstoff eine von der Regeleinheit (15) ermittelte Regelmenge des Reduktionsgases zugeführt wird.

6. Verfahren nach einem der Ansprüche 1 bis 4,
**dadurch gekennzeichnet,**
**daß** dem Behandlungsraum (10) des Ofens (14) eine von der Regeleinheit (15) ermittelte Regelmenge des Reduktionsgases separat zugeführt wird.

7. Verfahren nach einem der Ansprüche 1 bis 6,
**dadurch gekennzeichnet,**
**daß** in den Behandlungsraum (10) des Ofens (14) als Reduktionsgas Propan eingedüst oder eingeleitet wird.

8. Verfahren nach einem der Ansprüche 1 bis 7,
**dadurch gekennzeichnet,**
**daß** der gasförmige Stickstoff mit bis zu 3 Vol.% Sauerstoff und das Reduktionsgas im Gegenstrom (28) zu der Transportrichtung (27) der Teile in den Behandlungsraum (10) des Ofens (14) eingedüst oder eingeleitet wird.

9. Glühen von Teilen nach einem Verfahren gemäß der Ansprüche 1 bis 8.

10. Vergüten von Teilen nach einem Verfahren gemäß der Ansprüche 1 bis 8.

11. Sintem von Teilen nach einem Verfahren gemäß der Ansprüche 1 bis 8.

12. Löten von Teilen nach einem Verfahren gemäß der Ansprüche 1 bis 8.

## Claims

1. A process for the heat treatment of parts which are exposed to a protective gas atmosphere which is produced in situ within a treatment compartment of a furnace in order to essentially retain the surface properties of these parts, the process comprising the following steps:
heating the furnace to a temperature above 600°C,
injecting or passing gaseous nitrogen containing up to 3% by volume of oxygen and a reduction gas into the treatment compartment,
which comprises
the oxygen activity of the protective gas forming in the treatment compartment (10) of the furnace (14) being determined and, from the determined oxygen activity value an actual value signal being generated,
the actual value signal being fed to a control unit (15) in which a reference value for the oxygen activity is stored,
from the reference value, a reference signal being formed which is compared with the actual value signal and
the control unit (15), in the event of variances between the actual value signal and reference signal, altering the feed of the reduction gas until the actual value signal corresponds to the reference signal, where the reduction gas used is a hydrocarbon gas, and where a gas which is neutral to carburration is produced by keeping the reference value for the oxygen activity in a range in which the carbon activity a_{c} in the treatment compartment is between 0.005 and 0.20.

2. The process as claimed in claim 1, wherein the oxygen activity is determined by an O₂ probe (26) or lambda probe.

3. The process as claimed in claim 1 or 2, wherein the oxygen activity is determined at essentially the hottest point (30) of the treatment compartment (10) where the parts are heat-treated.

4. The process as claimed in one of claims 1 to 3, wherein a basal rate of the reduction gas adapted to the percentage by volume oxygen content is fed to the nitrogen containing up to 3% by volume of oxygen prior to the injection into the treatment compartment (10) of the furnace (14).

5. The process as claimed in one of claims 1 to 4, wherein a control amount of the reduction gas determined by the control unit (15) is fed to the nitrogen containing up to 3% by volume of oxygen.

6. The process as claimed in one of claims 1 to 4, wherein a control amount of the reduction gas determined by the control unit (15) is fed separately to the treatment compartment (10) of the furnace (14).

7. The process as claimed in one of claims 1 to 6, wherein, as reduction gas, propane is injected or passed into the treatment compartment (10) of the furnace (14).

8. The process as claimed in one of claims 1 to 7, wherein the gaseous nitrogen containing up to 3% by volume of oxygen and the reduction gas is injected or passed into the treatment compartment (10) of the furnace (14) in countercurrent (28) to the direction of transport (27) of the parts.

9. An annealing of parts by a process as claimed in one of claims 1 to 8.

10. A tempering of parts by a process as claimed in claims 1 to 8.

11. A sintering of parts by a process as claimed in claims 1 to 8.

12. A soldering of parts by a process as claimed in claims 1 to 8.

## Revendications

1. Procédé pour le traitement thermique de pièces exposées à une atmosphère de gaz inerte produite en lieu et place à l'intérieur d'un espace de traitement d'un four, pour obtenir principalement les propriétés de surface de ces pièces, dans lequel le procédé comprend les étapes suivantes :
- chauffage du four à une température au-dessus de 600°C,
- injection ou introduction d'azote sous forme gazeuse, avec jusqu'à 3 % en volume d'oxygène et avec un gaz réducteur, dans l'espace de traitement,
**caractérisé en ce qu'**
on détermine l'activité de l'oxygène du gaz protecteur qui se forme dans l'espace de traitement (10) du four (14), et à partir de la valeur déterminée de l'activité de l'oxygène on produit un premier signal,
le premier signal est amené à une unité de réglage (15) contenant une valeur de consigne pour l'activité de l'oxygène,
on forme à partir de la valeur de consigne, un signal de consigne qui est comparé avec le premier signal, et
l'unité de réglage (15) pour des déviations entre le premier signal et le signal de consigne, modifie l'amenée du gaz réducteur jusqu'à ce que le premier signal corresponde au signal de consigne, en mettant en oeuvre comme gaz réducteur un hydrocarbure gazeux et en produisant un gaz neutre pour la carburation, et en maintenant la valeur de consigne pour l'activité de l'oxygène dans une zone telle que l'activité du carbone a_{c} se situe dans l'espace de traitement, entre 0,005 et 0,20.

2. Procédé selon la revendication 1,
**caractérisé en ce que**
l'activité de l'oxygène est déterminée à l'aide d'une sonde à O₂ (26) ou d'une sonde lambda.

3. Procédé selon la revendication 1 ou la revendication 2,
**caractérisé en ce que**
l'activité de l'oxygène à l'endroit essentiellement le plus chaud (30) de l'espace de traitement (10) est déterminé là où le traitement thermique des pièces s'effectue.

4. Procédé selon l'une des revendications 1 à 3,
**caractérisé en ce qu'**
à l'azote ayant jusqu'à 3 % en volume d'oxygène, on amène une quantité de base adaptée au % en volume d'oxygène, de gaz réducteur avant l'injection dans l'espace de traitement (10) du four (14).

5. Procédé selon l'une quelconque des revendications 1 à 4,
**caractérisé en ce qu'**
on amène à l'azote ayant jusqu'à 3 % en volume d'oxygène, une quantité de régulation déterminée par l'unité de réglage (15) du gaz réducteur.

6. Procédé selon l'une quelconque des revendications 1 à 4,
**caractérisé en ce qu'**
on amène séparément l'espace de traitement (10) du four (14) une quantité de réglage déterminée par l'unité de réglage (15) de gaz réducteur.

7. Procédé selon l'une quelconque des revendications 1 à 6,
**caractérisé en ce que**
dans l'espace de traitement (10) du four (14), on injecte ou on introduit du propane comme gaz réducteur.

8. Procédé selon l'une quelconque des revendications 1 à 7,
**caractérisé en ce qu'**
on injecte ou on introduit l'azote sous forme gazeuse ayant jusqu'à 3 % en volume d'oxygène et le gaz réducteur à contre-courant (28), de la direction de transport (27) des pièces dans l'espace de traitement (10) du four (14).

9. Calcination au rouge de pièces selon un procédé conformément à l'une quelconque des revendications 1 à 8.

10. Trempe de pièces selon un procédé conforme à l'une quelconque des revendications 1 à 8

11. Frittage de pièces selon un procédé conforme à l'une quelconque des revendications 1 à 8.

12. Soudure de pièces selon un procédé conforme à l'une quelconque des revendications 1 à 8.
